# EUROPÄISCHE PATENTSCHRIFT

(11) **EP 4 003 771 B1**
(45) Veröffentlichungstag und Bekanntmachung des Hinweises auf die Patenterteilung: **24.07.2024**
(21) Anmeldenummer: 20739922.1
(22) Anmeldetag: 08.07.2020
(51) Int. Cl.: B60K 28/16, B60W 20/10, B60W 30/18, B62D 59/04

(54) **VERFAHREN ZUM UNTERSTÜTZEN EINES ZUGFAHRZEUGS BEI TRAKTIONSVERLUST**
METHOD OF ASSISTING THE TRACTOR TRACTION OF A TRACTOR-TRAILER VEHICLE
MÉTHODE D'ASSISTANCE DE TRACTION D'UN TRACTEUR TIRANT UNE REMORQUE

(30) Priorität: 22.07.2019 DE 102019119786
(43) Veröffentlichungstag der Anmeldung: 01.06.2022
(73) Patentinhaber: ZF CV Systems Global GmbH, 3006 Bern (CH)
(72) Erfinder: HESEDING, Johannes, 30169 Hannover (DE); RICKE, Janik, 31311 Uetze (DE)
(74) Vertreter: Ohlendorf, Henrike
(86) Internationale Anmeldenummer: PCT/EP2020/069208
(87) Internationale Veröffentlichungsnummer: WO 2021/013541

(56) Entgegenhaltungen:
- WO-A1-93/07023
- DE-A1- 102015 009 149
- DE-A1- 102016 213 786
- DE-A1- 102017 210 485
- US-A1- 2018 080 852

## Beschreibung

Die Erfindung betrifft den Bereich von Fahrzeuggespannen mit mindestens einem Zugfahrzeug und einem von dem Zugfahrzeug gezogenen Anhängerfahrzeug. Insbesondere ist das Zugfahrzeug ein Nutzfahrzeug, wie ein Lastkraftwagen, insbesondere eine Sattelzugmaschine. Das Anhängerfahrzeug ist vorzugsweise ebenfalls ein Nutzfahrzeug, vorzugsweise ein Sattelauflieger oder ein Deichselanhänger, beispielsweise ein Zentralachsanhänger oder ein Gelenkdeichselanhänger. Insbesondere betrifft die Erfindung die Unterstützung des Zugfahrzeugs im Falle eines Traktionsverlusts, der beispielsweise auf glatter Fahrbahn im Falle einer angeforderten Beschleunigung durch einen Fahrer, der auch Fahrzeugführer oder Bediener genannt wird, auftritt.

In Zugfahrzeugen sind üblicherweise Fahrerassistenzsysteme integriert, die den Fahrer bei der Steuerung des Fahrzeugs unterstützen. Diese Fahrerassistenzsysteme laufen häufig im Hintergrund und greifen dann nur bei Bedarf in die Steuerung des Fahrers ein. Hierzu zählt beispielsweise ein Traktionskontrollsystem, bei dem Signale der Raddrehzahlsensoren des Zugfahrzeugs aufgenommen werden und im Falle eines Differenzschlupfs zwischen Antriebs- und Nichtantriebsachsen auf einen Traktionsverlust geschlossen werden kann. Ein Traktionsverlust wird etwa angenommen, wenn der Differenzschlupf des Zugfahrzeugs über einen vordefinierten Schwellenwert steigt. In diesem Fall wird das Antriebsdrehmoment der Antriebsachse reduziert, um eine Traktion wiederherzustellen. So wird dann wegen der Reduzierung des Drehmoments im Falle einer gleichzeitigen Beschleunigungsanforderung durch den Fahrer nicht im durch den Fahrer gewünschten Maße auf die Beschleunigungsanforderung reagiert. Eine vergleichsweise geringere Beschleunigung, als durch den Fahrer gewünscht, wird daher bereitgestellt.

In Abhängigkeit der aktuellen Fahrsituation wird durch das Traktionskontrollsystem so zwar das Ausbrechen des Zugfahrzeugs verhindert, wobei andererseits durch den Eingriff und damit der Nichtumsetzung des Fahrerwunsches gleichzeitig der Komfort des Fahrers beeinträchtigt wird. Insbesondere können sogar Gefahrsituationen dadurch entstehen, dass, im Falle eine Traktionsverlusts eines Fahrzeugs, das in einem Gefahrenbereich, beispielsweise auf einer Kreuzung, zum Stehen gekommen ist, die Kreuzung nicht rechtzeitig verlassen kann und so eine Gefährdung für den übrigen Verkehr darstellt.

Um Gefahrensituationen zu vermindern und den Komfort zu erhöhen, ist es aus dem Stand der Technik bekannt, ein Anhängerfahrzeug, das mit dem Zugfahrzeug gekoppelt ist, mit angetriebenen Achsen auszustatten und im Falle eine Traktionsverlusts des Zugfahrzeugs das Zugfahrzeug durch einen Antrieb der Räder des Anhängerfahrzeugs zu unterstützen. Diese Unterstützung gelingt, da ein Traktionsverlust des Zugfahrzeugs häufig dann auftritt, wenn ein schwer beladenes Anhängerfahrzeug angekoppelt ist und in Bewegung gesetzt werden muss, wobei gerade durch die schwere Beladung des Anhängerfahrzeugs eine vergleichsweise bessere Kraftübertragung der Räder des Anhängerfahrzeugs auf die Straße möglich ist. Bei gleicher Fahrbahnbeschaffenheit ist in dem beschriebenen Fall daher ein Traktionsverlust bei dem Zugfahrzeug wahrscheinlicher als bei dem Anhängerfahrzeug.

Bei derartiger Unterstützung des Zugfahrzeugs durch ein Anhängerfahrzeug im Falle eines Traktionsverlusts sind verschiedene Systemlösungen bekannt, die jedoch häufig ineffizient mit den übrigen Fahrzeugkomponenten zusammenwirken. In sicherheitskritischen Anwendungsfällen können aufgrund einer fehlenden Kommunikation mit den weiteren Sicherheitssystemen die bekannten Systemlösungen teilweise entweder nur sehr eingeschränkt oder gar nicht unterstützend eingreifen. Wird demgegenüber eine hohe Integration solcher Systemlösungen angestrebt, ist dies bislang nur mit einem sehr hohen Aufwand zusätzlicher Komponenten möglich. Insbesondere sind aus dem Stand der Technik zusätzliche Schnittstellen zwischen Zugfahrzeug und Anhängerfahrzeug oder zusätzliche Sensoren nötig, um überhaupt eine Unterstützung zu erreichen.

DE 10 2017 210 485 A1 offenbart ein Verfahren zur Traktionsunterstützung eines Fahrzeuggespanns, wobei ein Zugfahrzeug einen elektrischen Energiespeicher aufweist und ein Anhänger elektrisch antreibbare Räder aufweist. Es wird ermittelt, ob ein Durchdrehen wenigstens eines von angetriebenen Rädern des Zugfahrzeugs vorliegt und/oder eine Antriebsschlupfregelung am Zugfahrzeug aktiv ist. Ist dies der Fall, so werden elektrisch antreibbare Räder des Anhängers zur Unterstützung einer Traktion des Zugfahrzeugs angetrieben.

DE 10 2015 009 149 A1 offenbart einen Lkw mit einer Zugmaschine und einem einem hinteren Fahrschemel an einem Sattelauflieger oder einem Nachläufer, wobei der hintere Fahrschemel Räder aufweist, die von einem Elektromotor angetrieben werden.

DE 10 2016 213 786 A1 offenbart ein Kraftfahrzeuggespann mit einem Zugfahrzeug und einem Anhänger. Der Anhänger weist eine elektrische Antriebseinheit und ein Steuergerät auf. Das Steuergerät ist ausgebildet, ein Steuersignal eines Steuergeräts des Zugfahrzeugs zu erfassen und in Abhängigkeit des Signals elektrische Energie der Antriebseinheit zum Antrieb des Anhängers und zum Schieben des Zugfahrzeugs bereitzustellen.

Aufgabe der vorliegenden Erfindung ist es daher, ein Verfahren und eine Vorrichtung zur Unterstützung eines Zugfahrzeugs im Falle eines Traktionsverlusts zu finden, das weitestgehend in eine bestehende Fahrzeugstruktur und Fahrzeugfunktionalität integrierbar ist und durch dessen Integration ein möglichst geringer zusätzlicher Hardwareaufwand erfolgen muss.

Erfindungsgemäß wird hierzu eine Lösung gemäß Anspruch 1 vorgeschlagen. Demnach betrifft die Erfindung ein Verfahren zum Unterstützen eines Zugfahrzeugs bei Traktionsverlust durch ein Anhängerfahrzeug. Gemäß dem Verfahren wird zunächst ein Differenzschlupf zwischen zumindest einem angetriebenen Rad und mindestens einem antriebslosen Rad des Zugfahrzeugs mit einem Bremssteuergerät des Zugfahrzeugs bestimmt, der oberhalb einem vordefinierten Schwellenwert liegt. Liegt dieser Differenzschlupf über dem Schwellenwert, wird im Folgenden auch von einem Traktionsverlust gesprochen.

Der Differenzschlupf bezeichnet hierbei vorzugsweise einen Schlupfunterschied zwischen dem angetriebenen Rad und dem antriebslosen, also nichtangetriebenen, Rad. Dieser Schlupfunterschied kann ein absoluter oder relativer Wert sein, der den aktuellen Schlupfunterschied darstellt, oder der einer Änderungsrate des Schlupfunterschieds, nämlich einer zeitlichen Änderung, insbesondere in Form einer Steigung, entspricht. Zur Bestimmung des Differenzschlupfs nimmt das Bremssteuergerät des Zugfahrzeugs vorzugsweise Signale von Raddrehzahlsensoren des mindestens einen angetriebenen Rads und des mindestens einen antriebslosen Rads auf und vergleicht diese oder daraus abgeleitete Signale miteinander. Eine Änderungsrate wird beispielsweise durch zeitliche Ableitung der Differenz der Raddrehzahlen bestimmt. Gemäß einer alternativen oder zusätzlichen Ausführungsform wird der Differenzschlupf mit dem Bremssteuergerät des Zugfahrzeugs auch durch Vergleich der Radgeschwindigkeit oder Radumfangsgeschwindigkeit eines Rades, insbesondere eines Antriebsrades, und der aktuellen Geschwindigkeit des Zugfahrzeugs bestimmt. Die aktuelle Geschwindigkeit wird dann beispielsweise als Referenzgeschwindigkeit bezeichnet.

Der vordefinierte Schwellenwert ist hierbei vorzugsweise so gewählt, dass der Differenzschlupf, wenn er über dem Schwellenwert liegt, eindeutig nicht auf einen Schlupf durch die alleinige Kraftübertragung im Beschleunigungsfall hinweist, sondern Anzeichen für eine fehlende Traktion, beispielsweise aufgrund von glatter Fahrbahn, ist. Entspricht der Differenzschlupf demnach einem aktuellen Schlupfwert, so definiert der Schwellenwert einen maximalen erlaubten Wert, ab dem ein aktueller Schlupfwert ein Anzeichen für eine fehlende Traktion ist. Entspricht der Differenzschlupf demgegenüber einer Änderungsrate des Schlupfunterschieds, so definiert der Schwellenwert eine maximal erlaubte Änderungsrate, in deren Überschreiten ein Anzeichen für eine fehlende Traktion gesehen wird.

Im nächsten Schritt wird eine Beschleunigungsanforderung in Abhängigkeit des bestimmten Differenzschlupfs im Bremssteuergerät des Zugfahrzeugs erzeugt oder bestimmt. Die Beschleunigungsanforderung beschreibt damit vorzugsweise ein Signal oder ein Signal mit einem Wert, insbesondere einem Drehmomentwert, der zum Ausgleich der wegen des Traktionsverlusts verringerten Beschleunigung oder verringerten Antriebsmoments angefordert werden soll. Vorzugsweise wird gleichzeitig mit Detektion des Traktionsverlusts das Drehmoment, das vom Fahrer zur Beschleunigung gewünscht ist und beim Traktionsverlust mit dem Antrieb versucht wird umzusetzen, aufgrund des Differenzschlupfs, der oberhalb dem vordefinierten Schwellenwert liegt, reduziert. Die vom Bremssteuergerät erzeugte Beschleunigungsanforderung wird dann vorzugsweise so erzeugt, dass diese im Wesentlichen dem Betrag des reduzierten Drehmoments entspricht.

Vorteilhafterweise ist es auch möglich, dass das Bremssteuergerät des Zugfahrzeugs nicht nur das Drehmoment des angetriebenen Rads reduziert, sondern dass auch einzelne Räder zum Erhalt der Stabilität des Fahrzeugs gebremst werden.

Gemäß der Erfindung wird in einem weiteren Schritt die Beschleunigungsanforderung an ein Anhängerbremssteuergerät eines Anhängerfahrzeugs übertragen. Daraufhin wird ein Ansteuersignal im Anhängerbremssteuergerät erzeugt, das für einen elektrischen Antrieb des Anhängerfahrzeugs vorgesehen ist. Das Ansteuersignal wird dann an den elektrischen Antrieb des Anhängerfahrzeugs übertragen und ein Antriebsdrehmoment mit dem elektrischen Antrieb in Abhängigkeit des Ansteuersignals erzeugt. Das mit dem elektrischen Antrieb erzeugte Antriebsdrehmoment bezeichnet dabei vorzugsweise ein positives Drehmoment, das mit elektrischen Motoren des elektrischen Antriebs erzeugt wird und zur Beschleunigung des Anhängerfahrzeugs führt, indem mit den Motoren verbundene Räder angetrieben werden.

Die Beschleunigungsanforderung entspricht somit vorzugsweise einem Momentenwunsch oder einer Momentenanforderung. Damit ist der Begriff "Beschleunigungsanforderung" hier nicht ausschließlich auf ein Erhöhen der Geschwindigkeit beschränkt, sondern umfasst beispielsweise auch den Fall, dass die aktuelle Geschwindigkeit beibehalten werden soll und hierfür ein Drehmomentwert, nämlich eine Momentanforderung, mit einem Wert bestimmt wird, der größer Null ist und so in einer konstanten Geschwindigkeit resultiert, also einer Beschleunigungsanforderung, die weder einem positiven noch einem negativen Beschleunigungswunsch entspricht.

Das Verfahren zeichnet sich insbesondere dadurch aus, dass die vorhandenen Steuergeräte, nämlich das Bremssteuergerät und das Anhängerbremssteuergerät bereits regelmäßig vorhandene Komponenten im Zugfahrzeug bzw. Anhängerfahrzeug sind und diese lediglich geringfügig in ihrer Funktionalität erweitert werden müssen, um das genannte Verfahren auszuführen. Dies ist beispielsweise durch eine angepasste Software mit vergleichsweise geringem Aufwand möglich. Beispielsweise sind keine zusätzlichen Sensoren zum Bestimmen eines Traktionsverlusts nötig, da diese ohnehin bereits in einem herkömmlichen Bremssteuergeräts eines Zugfahrzeugs enthalten bzw. mit diesem verbunden sind. Auch ist eine Ansteuerung des elektrischen Antriebs im Anhängerfahrzeug unmittelbar durch das Zugfahrzeug nicht nötig und eine einfache Kommunikation zwischen Zugfahrzeug und Anhängerfahrzeug zur Realisierung des Verfahrens daher möglich.

Gemäß einer Ausführungsform umfasst das Übertragen der Beschleunigungsanforderung vom Bremssteuergerät des Zugfahrzeugs an das Anhängerbremssteuergerät des Anhängerfahrzeugs das Übertragen der Beschleunigungsanforderung über einen CAN-ISO 11992-2 Bus. Dieser Bus ist standardisiert zwischen dem Bremssteuergerät eines Zugfahrzeugs und einem Anhängerbremssteuergerät eines Anhängerfahrzeugs vorhanden und wird gemäß der Ausführungsform durch Nutzen einer bislang ungenutzten Nachricht mitverwendet. Eine zusätzliche Kommunikationsschnittstelle ist dann zur Umsetzung der Funktion des erfindungsgemäßen Verfahrens nicht nötig.

Gemäß einer weiteren Ausführungsform wird die Beschleunigungsanforderung in Abhängigkeit des Differenzschlupfs des Zugfahrzeugs und einer gewünschten Beschleunigung eines Fahrerbedienelements oder eines Fahrerassistenzsystems bestimmt. Derartige Fahrerbedienelemente oder Fahrerassistenzsysteme umfassen insbesondere eine Gaspedalstellung, CAN-Bus-Informationen über ein gewünschtes Motormoment, Getriebeinformationen, Tempomat oder sonstige Assistenzsysteme. Hierbei wird der Tatsache Sorge getragen, dass beispielsweise im Falle, dass ein Fahrer während oder nach einem Traktionsverlust eine andere Beschleunigung als vor dem Traktionsverlust wünscht, nicht nur versucht wird, durch die Unterstützung des elektrischen Antriebs im Anhängerfahrzeug durch eine entsprechende Beschleunigungsanforderung den Fahrerwunsch vor dem Traktionsverlust auszugleichen, sondern auch einen geänderten Fahrerwunsch.

Es ist beispielsweise vorstellbar, dass im Augenblick des Traktionsverlusts noch eine vergleichsweise geringe Beschleunigung vom Fahrer gewünscht ist und beispielsweise durch die Drehmomentreduzierung gesteuert durch das Traktionskontrollsystem im Zugfahrzeug der Abschluss eines Fahrmanövers verzögert wird, was instinktiv den Fahrer veranlasst, eine vergleichsweise höhere Beschleunigung zu wünschen, um das Fahrmanöver rechtzeitig abzuschließen. Dem wird Sorge getragen, indem der geänderte Beschleunigungswunsch des Fahrers berücksichtigt wird, wenn die Beschleunigungsanforderung erzeugt wird.

Gemäß einer weiteren Ausführungsform wird ein Fahrzeugzustand des Anhängerfahrzeugs mit dem Anhängerbremssteuergerät bestimmt. Das Erzeugen des Ansteuersignals für den elektrischen Antrieb des Anhängerfahrzeugs wird dann in Abhängigkeit der Beschleunigungsanforderung und zusätzlich in Abhängigkeit des Fahrzeugzustands des Anhängerfahrzeugs erzeugt. Durch Berücksichtigung des Fahrzeugzustands des Anhängerfahrzeugs wird so gewährleistet, dass der elektrische Antrieb derart mit dem Ansteuersignal angesteuert wird, dass von vornherein im Wesentlichen ausschließbar oder zumindest die Gefahr minimiert wird, dass ein Anhängerfahrzeug in einen instabilen Fahrzeugzustand gerät. Die Sicherheit wird dadurch erhöht.

Besonders bevorzugt umfasst das Bestimmen des Fahrzeugzustands gemäß einer Ausführungsform zumindest das Bestimmen eines Beladungszustands des Anhängerfahrzeugs, insbesondere umfassend zumindest das Bestimmen einer Achslast der Achsen des Anhängerfahrzeugs und zusätzlich oder alternativ eine Massenverteilung im Anhängerfahrzeug. Der Beladungszustand und/oder die Massenverteilung lassen sich vorzugsweise durch Bestimmen der Drücke von Luftfedern des Anhängerfahrzeugs oder durch einen lastabhängigen Bremskraftregler ermitteln. So lassen sich, insbesondere im Falle von elektrischen Antrieben mit Einzelradantrieb, also mit mehreren elektrischen Motoren, die zum Antreiben jeweils einem einzelnen Rad zugeordnet sind, unterschiedliche Antriebsmomente in Abhängigkeit der Massenverteilung oder des Ladezustands insgesamt erzeugen. Diese unterschiedlichen Antriebsdrehmomente würden in diesem Fall im Ansteuersignal für den elektrischen Antrieb vorgegeben werden. Somit wird einem Traktionsverlust und insbesondere einem Stabilitätsverlust des Anhängerfahrzeugs bei der Unterstützung des Zugfahrzeugs bei einem Traktionsverlust des Zugfahrzeugs entgegengewirkt.

Gemäß einer weiteren Ausführungsform erfolgt das Erzeugen des Ansteuersignals und/oder der Beschleunigungsanforderung zusätzlich in Abhängigkeit mindestens eines Knickwinkels. Zumindest ein erster Knickwinkel wird hierbei zwischen dem Zugfahrzeug und dem Anhängerfahrzeug bestimmt. Im Falle, dass das Anhängerfahrzeug ein weiteres Anhängerfahrzeug ist, das an das Anhängerfahrzeug angehängt ist, wird ein weiterer Knickwinkel zwischen dem Anhängerfahrzeug und dem weiteren Anhängerfahrzeug bestimmt.

Durch Berücksichtigung des oder der Knickwinkel ist es möglich, dass ein Vorschub bei der Unterstützung des Zugfahrzeugs durch ein Anhängerfahrzeug nur dann in vollem Umfang erfolgt, wenn kein Knickwinkel vorliegt, also Zugfahrzeug und Anhängerfahrzeug bzw. Anhängerfahrzeuge im Wesentlichen auf einer Geraden angeordnet sind. In Abhängigkeit des oder der Knickwinkel wird demnach dann ein Ansteuersignal oder eine Beschleunigungsanforderung zur Anforderung eines entsprechenden verringerten Antriebsdrehmoments für den Fall erzeugt, dass ein Knickwinkel vorliegt. Insbesondere kann die Unterstützung des Anhängerfahrzeugs beim Traktionsverlust des Zugfahrzeugs vollständig unterbunden werden, wenn ein oder mehrere Knickwinkel oberhalb vordefinierter Schwellenwerte liegen. Hierdurch wird die Stabilität des Gespanns aus Zugfahrzeug und Anhängerfahrzeug weiter erhöht.

Gemäß einer weiteren Ausführungsform wird der Differenzschlupf zwischen mindestens zwei mit dem elektrischen Antrieb angetriebenen Rädern des Anhängerfahrzeugs, insbesondere mit dem elektrischen Antrieb, ermittelt. Weiter umfasst das Ansteuersignal mindestens einen maximalen Drehmomentwert oder entspricht mindestens einem maximalen Drehmomentwert. Das Antriebsdrehmoment wird gemäß der Ausführungsform mit dem elektrischen Antrieb von einem vordefinierten Startwert schrittweise, insbesondere um einen vordefinierten Schrittwert mit einem vordefinierten Zeitintervall, oder kontinuierlich, insbesondere mit einer vordefinierten zeitlichen Steigung, bis zu dem maximalen Drehmomentwert erhöht. Die Erhöhung erfolgt, solange der Differenzschlupf unterhalb einem weiteren vordefinierten Schwellenwert liegt.

Durch die Ausführungsform wird sichergestellt, dass ausgehend von einer rutschigen oder glatten Fahrbahn, die Ursache für einen Traktionsverlust des Zugfahrzeugs ist, auch ein Traktionsverlust der elektrisch angetriebenen Räder des Anhängerfahrzeugs zumindest bei plötzlichem Drehmomentanstieg zur Unterstützung wahrscheinlich ist. Daher wird das Antriebsdrehmoment von dem vordefinierten Startwert, bei dem beispielsweise gar kein oder nur ein geringes Antriebsdrehmoment erzeugt wird, kontinuierlich oder schrittweise erhöht, solange kein signifikanter Differenzschlupf der Antriebsräder vorliegt. Der Startwert ist vorzugsweise als Antriebsdrehmoment mit einem Wert Null oder mit einem geringen Wert von beispielsweise 10 bis 100 Nm, insbesondere 1 0Nm, vorbestimmt. Jedenfalls ist der Startwert so gewählt, dass das Anhängerfahrzeug in keiner Situation das Zugfahrzeug durch den elektrischen Antrieb schiebt. Ein Traktionsverlust bzw. Durchdrehen der Antriebsräder des Anhängerfahrzeugs wird so verhindert.

Gemäß einer weiteren Ausführungsform entspricht oder umfasst die Beschleunigungsanforderung einem maximalen zu erzeugenden Antriebsdrehmoment, wobei das Ansteuersignal derart erzeugt wird, dass das maximale zu erzeugende Antriebsdrehmoment nicht überschritten wird, insbesondere, damit das Anhängerfahrzeug nicht auf das Zugfahrzeug aufschiebt. Hierdurch wird sichergestellt, dass nicht mehr Vorschub durch das Anhängerfahrzeug generiert wird, als es beispielsweise zum Ausgleich des Traktionsverlusts des Zugfahrzeugs nötig ist und welches durch Eingreifen der Bremsen, insbesondere des Zugfahrzeugs, wieder reduziert werden müsste oder anderenfalls zu einem instabilen Zustand des Gespanns führen würde.

Gemäß einer weiteren Ausführungsform wird ein Differenzschlupf zwischen mindestens einem angetriebenen und einem antriebslosen Rad des Anhängerfahrzeugs mit dem Anhängerbremssteuergerät überwacht und das Ansteuersignal in Abhängigkeit dieses Differenzschlupfs bestimmt. Hierbei wird berücksichtigt, dass bei instabiler Fahrt des Anhängerfahrzeugs, beispielsweise aufgrund eines Traktionsverlusts der angetriebenen Räder, das vom elektrischen Antrieb geforderte Antriebsdrehmoment mit dem Ansteuersignal reduziert wird, um eine Traktion zurückzugewinnen.

Gemäß einer weiteren Ausführungsform werden im Falle eines detektierten Differenzschlupfs des Anhängerfahrzeugs zwischen mindestens einem angetriebenen und einem antriebslosen Rad einzelne Räder mit einem Ansteuersignal angesteuert, das individuelle Antriebsdrehmomente für die einzelnen angetriebenen Räder umfasst, und/oder individuell gebremst, um das Anhängerfahrzeug im Schubbetrieb gerade zu halten.

Vorzugsweise wird also bei einem Traktionsverlust des Anhängerfahrzeugs das Ansteuersignal im Falle eines zentralen Elektromotors des elektrischen Antriebs mit Differentialantrieb so erzeugt, dass das Gesamtmoment des Elektromotors reduziert wird. Einzelne Räder, die über den zentralen Motor angetrieben werden, oder mehrere Räder können zusätzlich seitenselektiv gebremst werden, um das Anhängerfahrzeug im Schubbetrieb gerade zu halten. Vorzugsweise ist eine einzelne oder seitenselektive Bremsung zusätzlich vom im Anhängerfahrzeug verbauten Achsmodulator abhängig. Im Falle, dass der elektrische Antrieb im Anhängerfahrzeug als Einzelradantrieb vorgesehen ist, wird das Ansteuersignal derart erzeugt, dass eine Drehmomentreduktion im Falle des Durchdrehens der Reifen erfolgt, wobei die Drehmomentreduktion vom jeweiligen Inverter des elektrischen Antriebs, der dem elektrischen Motor eines Rads zugeordnet ist, radindividuell gesteuert. Hierzu umfasst das Ansteuersignal mehrere geforderte Antriebsdrehmomente jeweils für jeden der elektrischen Motoren. Neigt ein Antriebsrad zum Durchdrehen, wird das Drehmoment verringert, indem die zugeführte Leistung je Elektromotor reduziert wird. Auch hier kann durch Einzelradbremsung oder seitenselektive Bremsung über generatorischen Betrieb der Elektromotoren Stabilität erreicht werden. Reicht die Drehmomentreduktion oder elektrische Bremsung nicht aus, wird auch eine Reibbremse eingesetzt. So kann ein Bremsverschleiß reduziert werden.

Weiter betrifft die Erfindung ein Zugfahrzeug, das eingerichtet ist, das Verfahren nach einer der vorgenannten Ausführungsformen auszuführen. Das Zugfahrzeug umfasst zumindest ein Bremssteuergerät und ist eingerichtet, einen Differenzschlupf zwischen zumindest einem angetriebenen und mindestens einem antriebslosen Rad des Zugfahrzeugs, der oberhalb einem vordefinierten Schwellenwert liegt, mit dem Bremssteuergerät zu bestimmen. Das Zugfahrzeug ist weiter eingerichtet, eine Beschleunigungsanforderung in Abhängigkeit des bestimmten Differenzschlupfs zu erzeugen und die Beschleunigungsanforderung an ein Anhängerbremssteuergerät eines Anhängerfahrzeugs zu übertragen.

Weiter umfasst die Erfindung ein Anhängerfahrzeug zum Ausführen eines Verfahrens nach einer der vorgenannten Ausführungsformen. Das Anhängerfahrzeug ist weiter zum Koppeln mit einem Zugfahrzeug gemäß der Erfindung eingerichtet. Das Anhängerfahrzeug weist zumindest ein Anhängerbremssteuergerät und einen elektrischen Antrieb auf. Das Anhängerbremssteuergerät ist eingerichtet, eine Beschleunigungsanforderung zu empfangen und mit dem Anhängerbremssteuergerät daraus ein Ansteuersignal für einen elektrischen Antrieb des Anhängerfahrzeugs zu erzeugen. Der elektrische Antrieb umfasst hierzu zumindest einen Energiespeicher, mindestens einen Umrichter, der auch Inverter genannt wird, und mindestens einen elektrischen Motor. Ferner ist der elektrische Antrieb eingerichtet, ein Antriebsdrehmoment in Abhängigkeit des Ansteuersignals zu erzeugen.

Außerdem umfasst die Erfindung ein Gespann aus dem zuvor genannten erfindungsgemäßen Zugfahrzeug und dem zuvor genannten erfindungsgemäßen Anhängerfahrzeug.

Weiterhin umfasst die Erfindung ein Computerprogrammprodukt, das Programmcode aufweist, der ausgeführt auf einem Bremssteuergerät eines Zugfahrzeugs die Schritte des Verfahrens gemäß einer der Ausführungsformen ausführt, die mit dem Bremssteuergerät ausgeführt werden, wobei das Computerprogrammprodukt ferner weiteren Programmcode aufweist, der ausgeführt auf einem Anhängerbremssteuergerät die Schritte des Verfahrens gemäß einer der Ausführungsformen ausführt, die mit dem Anhängerbremssteuergerät ausgeführt werden.

Weitere Ausführungsformen ergeben sich anhand der in den Figuren näher erläuterten Ausführungsbeispiele.
- Fig. 1: zeigt ein Gespann aus einem Zugfahrzeug und einem Anhängerfahrzeug und
- Fig. 2: die Schritte eines Ausführungsbeispiels des Verfahrens.

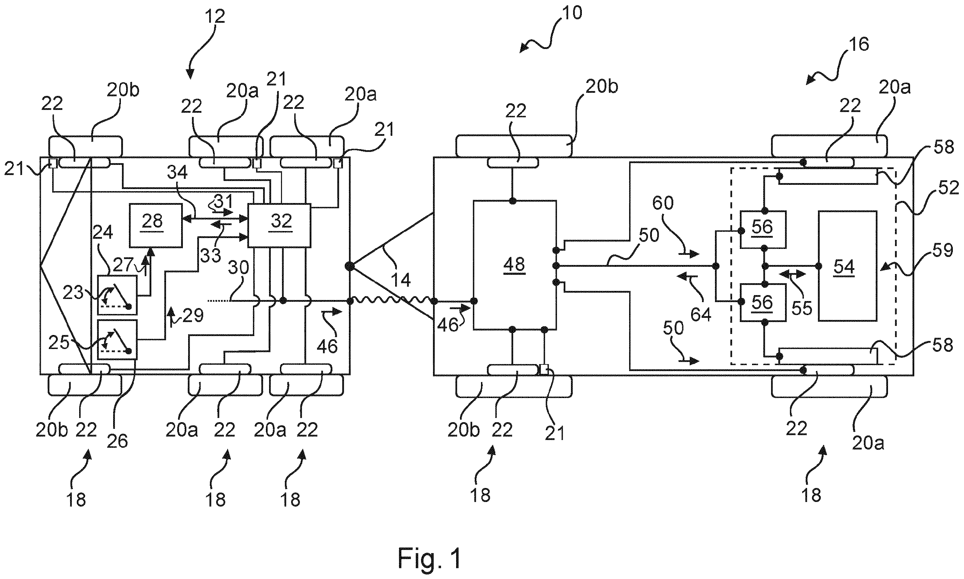

Fig. 1 zeigt ein Gespann 10. Das Gespann 10 umfasst ein Zugfahrzeug 12, das beispielsweise ein Nutzfahrzeug ist. Das Zugfahrzeug 12 ist über eine Deichsel 14 mit einem Anhängerfahrzeug 16 des Gespanns 10 verbunden. Das Anhängerfahrzeug 16 ist somit durch das Zugfahrzeug 12 ziehbar. Das Zugfahrzeug 12 sowie das Anhängerfahrzeug 16 umfassen jeweils mehrere Achsen 18, die jeweils zwei Räder 20a, 20b aufweisen. Die Räder 20a sind angetriebene Räder und gehören so zu einer Antriebsachse 18 und die Räder 20b sind antriebslose Räder und gehören zu einer nichtangetriebenen Achse 18. Antriebslose Räder 20b bezeichnen hier nichtangetriebene Räder. Jedes der Räder 20a, 20b ist mit einer Reibbremse 22 ausgestattet, um im Falle eines Bremswunsches die Räder 20a, 20b zu bremsen. Mindestens eine der Achsen 18 des Zugfahrzeugs 12 ist durch einen Verbrennungsmotor oder einen elektrischen Antrieb angetrieben, wobei weder ein Verbrennungsmotor noch ein elektrischer Antrieb zur besseren Übersicht in Fig. 1 dargestellt ist.

Zum Antreiben des Zugfahrzeugs 12 wird durch Variation einer Gaspedalstellung 23 eines Gaspedals 24 und durch Variation einer Bremspedalstellung 25 eines Bremspedals 26 durch einen Bediener des Zugfahrzeugs 12 ein Wunsch einer Geschwindigkeitserhöhung 27 bzw. ein Bremswunsch 29 signalisiert. Der Wunsch einer Geschwindigkeitserhöhung 27 oder ein Bremswunsch 29 wird gemäß einem hier nicht dargestellten alternativen Ausführungsbeispiel von einer Steuerung erzeugt, die einen autonomen Betrieb oder einen Fahrerassistenzbetrieb steuert. Im hier dargestellten Ausführungsbeispiel ist zur Signalisierung das Gaspedal 24 jedoch mit einem Fahrzeugsteuergerät 28 und das Bremspedal 26 mit einem Bremssteuergerät 32 verbunden. Das Fahrzeugsteuergerät 28 übermittelt Steuersignale zum Ansteuern des nicht dargestellten Antriebs auf einen mit dem Fahrzeugsteuergerät 28 verbundenen, nicht dargestellten Bus. Das Fahrzeugsteuergerät 28 übermittelt aus dem Wunsch einer Geschwindigkeitserhöhung 27 eine angeforderte positive Beschleunigung 31 und übergibt diese über eine Verbindung 34 auch an das Bremssteuergerät 32. Das Bremssteuergerät 32 überwacht, insbesondere im Falle einer angeforderten positiven Beschleunigung 31, einen Differenzschlupf zwischen mindestens einem angetriebenen Rad 20a und einem antriebslosen Rad 20b. Hierzu sind Raddrehzahlsensoren 21 an den Rädern 20a, 20b vorgesehen. Wird ein Differenzschlupf oberhalb einem vordefinierten Schwellenwert im Bremssteuergerät 32 detektiert, so wird dies als Traktionsverlust des Zugfahrzeugs 12 gedeutet. Das Bremssteuergerät 32 erzeugt dann ein Signal 33 zur Reduktion des Antriebsdrehmoments für das Fahrzeugsteuergerät 28 und sendet dieses über die Verbindung 34 an das Fahrzeugsteuergerät 28. Außerdem wird eine Beschleunigungsanforderung 46 erzeugt und auf einem CAN-ISO 11992-2 Bus 30 ausgesendet. Der Bus 30 ist mit einem Anhängerbremssteuergerät 48 des Anhängerfahrzeugs 16 verbunden, an das die Beschleunigungsanforderung 46 übertragen wird.

Mit dem Anhängerbremssteuergerät 48, das die Beschleunigungsanforderung 48 über den Bus 30 empfängt, ist weiter ein elektrischer Antrieb 52 über einen weiteren Bus 50 verbunden. Der elektrische Antrieb umfasst eine Batterie 54, die wiederaufladbar ist und auch als Akkumulator bezeichnet werden kann. Neben der Batterie 54 umfasst der elektrische Antrieb 52 zwei Umrichter 56, die mit der Energie der Batterie 54 elektrische Motoren 58 versorgen, um ein positives Drehmoment zu erzeugen. Die Batterie 54, die Umrichter 56 und die elektrischen Motoren 58 entsprechen Komponenten 59 des elektrischen Antriebs 52. Gemäß einem alternativen, hier nicht dargestellten Ausführungsbeispiel ist nur ein elektrischer Motor 58 vorgesehen, der auch nur einen Umrichter 56 aufweist und über ein Differential zwei oder mehrere Räder 20b antreibt.

Die elektrischen Motoren 58 in Fig. 1 können auch im Generatorbetrieb oder generatorisch betrieben werden, sodass elektrische Energie 55 über die Umrichter 56 zurück in die Batterie 54 gespeist wird. Der Umrichter 56 des elektrischen Antriebs 52 ist mit dem Anhängerbremssteuergerät 48 über den weiteren Bus 50 verbunden, um ein Ansteuersignal 60 vom Anhängerbremssteuergerät 48 zu empfangen, das im Anhängerbremssteuergerät 48 in Abhängigkeit der Beschleunigungsanforderung 46 erzeugt wird.

Ein Ansteuern der Umrichter 56, das in Abhängigkeit des Ansteuersignals 60 erfolgt, gibt einerseits vor, ob die elektrischen Motoren 58 im Generatorbetrieb oder Motorbetrieb betrieben werden sollen und welches Drehmoment hierbei aufgewendet werden soll. Im Falle des Betriebs der elektrischen Motoren 58 im Motorbetrieb wird von einem positiven Drehmoment gesprochen, während das Drehmoment, also ein Wert des Drehmoments im generatorischen Betrieb der elektrischen Motoren 58, als negatives Drehmoment bezeichnet wird.

Da vorliegend eine Unterstützung des Zugfahrzeugs 12 bei Traktionsverlust gewünscht ist, sind hier Ansteuersignale 60 nur mit mindestens einem positiven Drehmomentwert betrachtet.

Zum Ansteuern des elektrischen Antriebs 52, nämlich insbesondere der Umrichter 56, wird demnach von dem Anhängerbremssteuergerät 48 über den weiteren Bus 50 das Ansteuersignal 60 an den elektrischen Antrieb 52 gesendet und dem Ansteuersignal 60 im vorliegenden Fall zwei Drehmomentwerte entnommen, mit denen radindividuelle Antriebsdrehmomente erzeugt werden. Vorzugsweise sendet der elektrische Antrieb 52 auch ein Statussignal 64 an das Anhängerbremssteuergerät 48, um dem Anhängerbremssteuergerät 48 beispielsweise oder unter anderem mitteilen zu können, welches aktuell verfügbare positive Drehmoment oder welche aktuell verfügbare positive Drehmomentänderung durch den elektrischen Antrieb 52 zum aktuellen Zeitpunkt bereitgestellt werden kann. Die aktuell verfügbaren Drehmomente oder Drehmomentänderungen sind beispielsweise abhängig vom aktuellen Betriebszustand des elektrischen Antriebs 52.

Das Anhängerbremssteuergerät 48 ist außerdem sowie auch das Bremssteuergerät 32 des Zugfahrzeugs 12 mit Drehzahlsensoren 21 verbunden, um einen Differenzschlupf zwischen mindestens einem angetriebenen Rad 20a und einem antriebslosen Rad 20b des Anhängerfahrzeugs 16 zu überwachen, wobei dann zusätzlich in Abhängigkeit des Differenzschlupfs aus der Beschleunigungsanforderung 46 das Ansteuersignal 60 bestimmbar ist.

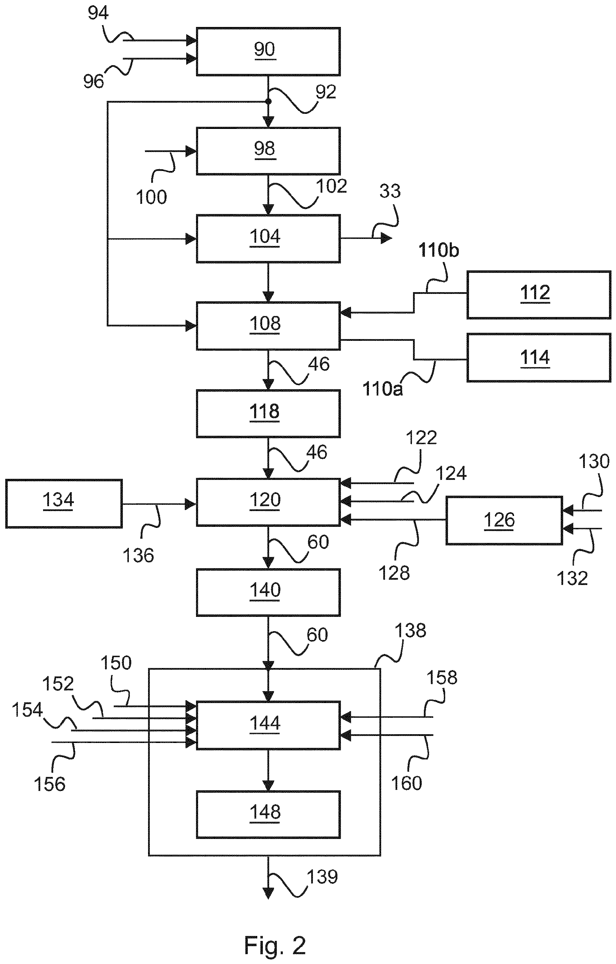

Fig. 2 zeigt die Schritte eines Ausführungsbeispiels des Verfahrens. Zunächst wird in einem Schritt 90 ein Differenzschlupf 92 bestimmt. Hierzu werden dem Bestimmungsschritt 90 Sensorsignale 94 eines Raddrehzahlsensors 21 an einem angetriebenen Rad 20a des Zugfahrzeugs 12 und Sensorsignale 96 eines weiteren Raddrehzahlsensors 21 an einem antriebslosen Rad 20b des Zugfahrzeugs 12 zugeführt. Der Differenzschlupf 92 wird in einem Schritt 98 mit einem Schwellenwert 100 verglichen und im Falle, dass der Differenzschlupf 92 den Schwellenwert 100 überschreitet, ein Traktionsverlust 102 gemeldet und ausgegeben. In einem Schritt 104 wird dann in Abhängigkeit des Differenzschlupfs 92 bei Auftreten des Traktionsverlusts 102 ein Signal 33 ausgegeben, das an ein Fahrzeugsteuergerät 28 übertragen wird, um das Motordrehmoment eines Motors des Zugfahrzeugs 12 zu reduzieren. Außerdem wird in Schritt 104 ein Befehl ausgegeben, um dann in einem Schritt 108 eine Beschleunigungsanforderung 46 zu bestimmen oder zu erzeugen. Zum Erzeugen der Beschleunigungsanforderung 46 werden neben dem Differenzschlupf 92 auch Beschleunigungswünsche 110a, 110b von Fahrerbedienelementen 112 und/oder Fahrerassistenzsystemen 114 zugeführt. Danach wird die Beschleunigungsanforderung 46 ausgegeben und nach einem Übertragungsschritt 118, bei dem die Beschleunigungsanforderung 46 an ein Anhängerbremssteuergerät 48 übertragen wurde, wird in einem Schritt 120 ein Ansteuersignal 60 aus der Beschleunigungsanforderung 46 erzeugt.

Zum Erzeugen des Ansteuersignals 60 werden dem Schritt 120 ein Knickwinkel 122 zwischen dem Zugfahrzeug 12 und einem Anhängerfahrzeug 16 und gegebenenfalls ein weiterer Knickwinkel 124 zwischen dem Anhängerfahrzeug 16 und einem weiteren Anhängerfahrzeug 16 zugeführt. Außerdem wird in einem Schritt 126 ein Zustand des Anhängerfahrzeugs 16 bestimmt und dieser Zustand 128 zusätzlich bei der Erzeugung des Ansteuersignals 60 mitberücksichtigt. Im Schritt 126 wird der Zustand 128 des Anhängerfahrzeugs 16 aus der Achslast 130 sowie einer Massenverteilung 132 bestimmt. Weiter wird ein weiterer Differenzschlupf 136 in einem Schritt 134 zwischen mindestens einem angetriebenen Rad 20a und einem antriebslosen Rad 20b des Anhängerfahrzeugs 16 bestimmt. Der Differenzschlupf 136 wird ebenfalls beim Erzeugen des Ansteuersignals 60 im Schritt 120 berücksichtigt. Das erzeugte Ansteuersignal 60 wird dann in einem Schritt 140 an einen elektrischen Antrieb 52 übertragen.

In einem Schritt 138 wird in Abhängigkeit des Ansteuersignals 60 ein oder mehrere Antriebsdrehmomente 139 mit einem oder mehreren elektrischen Motoren 58 und den damit verbundenen angetriebenen Rädern 20a des Anhängerfahrzeugs 16 erzeugt. Das Ansteuersignal 60 wird mit dem elektrischen Antrieb 52 zunächst im Schritt 138 als maximales Antriebsdrehmoment 142 interpretiert und damit ein Umrichter 56 in einem Ansteuerschritt 144 angesteuert. In Abhängigkeit der Ansteuerung wird in einem Schritt 148 mindestens ein elektrischer Motor 58 mit Energie aus einem Energiespeicher versorgt. Hierbei wird dem Schritt 144 ein Startwert 150, eine Schrittweite 152, ein Zeitintervall 154 sowie ein vordefinierter Schwellenwert 156 zugeführt. In Abhängigkeit dieser Eingangswerte wird der elektrische Motor 58 so angesteuert, dass ausgehend von dem Startwert 150 entsprechend ein Drehmoment mit dem Motor 58 erzeugt wird, der sich jedes Mal nach Ablauf des Zeitintervalls 154 um eine Schrittweite 152 bis zum maximalen Antriebsdrehmoment 142 erhöht, solange ein ebenfalls dem Schritt 144 zugeführter Differenzschlupf 158 mindestens zweier mit dem elektrischen Antrieb 52 angetriebenen Räder 20a unterhalb dem vordefinierten Schwellenwert 156 liegt.

Zusätzlich wird dem Ansteuerschritt 144 ein vordefinierter zeitlicher Steigungsverlauf 160 zugeführt, sodass es alternativ möglich ist, dass der elektrische Motor 58 beginnend vom Startwert 150 kontinuierlich gemäß dem Steigungsverlauf 160 bezüglich des erzeugten Drehmoments erhöht wird, bis der maximale Antriebsdrehmoment 142 erreicht ist.

Durch das bereitgestellte Antriebsdrehmoment 139 wird das Zugfahrzeug 12 durch das Anhängerfahrzeug 16 bei Traktionsverlust 102 des Anhängerfahrzeugs 16 unterstützt.

## Patentansprüche

1. Verfahren zum Unterstützen eines Zugfahrzeugs (12) bei Traktionsverlust (102) durch ein Anhängerfahrzeug (16), umfassend die Schritte:
- Bestimmen (90) eines Differenzschlupfs (92) zwischen zumindest einem angetriebenen Rad (20a) und mindestens einem antriebslosen Rad (20b) des Zugfahrzeugs (12) mit einem Bremssteuergerät (32) des Zugfahrzeugs (12), der oberhalb einem vordefinierten Schwellenwert (100) liegt,
- Erzeugen (108) einer Beschleunigungsanforderung (46) in Abhängigkeit des bestimmten Differenzschlupfs (92) im Bremssteuergerät (32) des Zugfahrzeugs (12),
- Übertragen (118) der Beschleunigungsanforderung (46) an ein Anhängerbremssteuergerät (48) des Anhängerfahrzeugs (16),
- Erzeugen (120) eines Ansteuersignals (60) für einen elektrischen Antrieb (52) des Anhängerfahrzeugs (16) in Abhängigkeit der Beschleunigungsanforderung (46) im Anhängerbremssteuergerät (48),
- Übertragen (140) mindestens eines Ansteuersignals (60) vom Anhängerbremssteuergerät (48) an den mindestens einen elektrischen Antrieb (52) des Anhängerfahrzeugs (16) und
- Erzeugen (138) mindestens eines Antriebsdrehmoments (139) mit dem elektrischen Antrieb (52) in Abhängigkeit des Ansteuersignals (60).

2. Verfahren nach Anspruch 1, wobei das Übertragen (118) der Beschleunigungsanforderung (46) an das Anhängerbremssteuergerät (48) das Übertragen (118) der Beschleunigungsanforderung (46) über einen CAN-ISO 11992-2 Bus (30) umfasst.

3. Verfahren nach Anspruch 1 oder 2, wobei die Beschleunigungsanforderung (46) in Abhängigkeit des Differenzschlupfs (92) des Zugfahrzeugs (12) und einer gewünschten Beschleunigung (110a, 11 0b) durch ein Fahrerbedienelement (112) oder ein Fahrerassistenzsystem (114) bestimmt wird.

4. Verfahren nach einem der vorhergehenden Ansprüche, wobei ein Fahrzeugzustand (128) des Anhängerfahrzeugs (16) mit dem Anhängerbremssteuergerät (48) bestimmt (126) wird und das Erzeugen (120) des Ansteuersignals (60) für den elektrischen Antrieb (52) des Anhängerfahrzeugs (16) zusätzlich in Abhängigkeit des Fahrzeugzustands (128) des Anhängerfahrzeugs (16) erfolgt.

5. Verfahren nach Anspruch 4, wobei beim Bestimmen (126) des Fahrzeugzustands (128) zumindest ein Beladungszustand (130, 132) des Anhängerfahrzeugs (16), insbesondere umfassend zumindest eine Achslast (130) der Achsen (18) des Anhängerfahrzeugs (16) und/oder einer Massenverteilung (132) im Anhängerfahrzeug (16), berücksichtigt wird.

6. Verfahren nach einem der vorhergehenden Ansprüche, wobei das Erzeugen (120) des Ansteuersignals (60) und/oder der Beschleunigungsanforderung (46) zusätzlich in Abhängigkeit mindestens eines Knickwinkels (122, 124) erzeugt wird, wobei ein Knickwinkel (122) zwischen dem Zugfahrzeug (12) und dem Anhängerfahrzeug (16) und im Falle, dass das Anhängerfahrzeug (16) ein weiteres Anhängerfahrzeug (16) ist, das an ein Anhängerfahrzeug (16) angehängt ist, ein weiterer Knickwinkel (124) zwischen dem Anhängerfahrzeug (16) und dem weiteren Anhängerfahrzeug (16) bestimmt wird.

7. Verfahren nach einem der vorhergehenden Ansprüche, wobei das Erzeugen (138) des Antriebsdrehmoments (139) mit dem elektrischen Antrieb (52) ein Ansteuern (144) von mindestens einem elektrischen Umrichter (56) des Anhängerfahrzeugs (16) zum Versorgen (148) mindestens eines elektrischen Motors (58) des Anhängerfahrzeugs (16) mit Energie (55) aus einem Energiespeicher (54) des Anhängerfahrzeugs (16) umfasst.

8. Verfahren nach einem der vorhergehenden Ansprüche, wobei ein Differenzschlupf (158) zwischen mindestens zwei mit dem elektrischen Antrieb (52) angetriebenen Rädern (20a) des Anhängerfahrzeugs (16), insbesondere mit dem elektrischen Antrieb (52), ermittelt wird und
das Ansteuersignal (60) mindestens einem maximalen Drehmomentwert (142) entspricht oder diesen umfasst und ein Ansteuerdrehmoment (146) zum Erzeugen (138) des Antriebsdrehmoments (139) mit dem elektrischen Antrieb (52) von einem vordefinierten Startwert (150) schrittweise, insbesondere mit einer vordefinierten Schrittweite (152) und mit einem vordefinierten Zeitintervall (154), oder kontinuierlich, insbesondere mit einem vordefinierten zeitlichen Steigungsverlauf (160), bis zu dem maximalen Drehmomentwert (142) erhöht wird, solange der Differenzschlupf (158) der angetriebenen Räder (20a) des Anhängerfahrzeugs (16) unterhalb einem weiteren vordefinierten Schwellenwert (156) liegt.

9. Verfahren nach einem der vorhergehenden Ansprüche, wobei die Beschleunigungsanforderung (46) einem maximalen zu erzeugenden Antriebsdrehmoment (142) mit dem elektrischen Antrieb (52) entspricht oder dieses umfasst und das Ansteuersignal (60) derart erzeugt wird, dass das maximal zu erzeugende Antriebsdrehmoment (142) nicht überschritten wird.

10. Verfahren nach einem der vorhergehenden Ansprüche, wobei ein Differenzschlupf (136) des Anhängerfahrzeugs (16) zwischen mindestens einem angetriebenen Rad (20a) und einem antriebslosen Rad (20b) des Anhängerfahrzeugs (16) mit dem Anhängerbremssteuergerät (48) überwacht wird und das Ansteuersignal (60) in Abhängigkeit dieses Differenzschlupfs (136) bestimmt wird.

11. Verfahren nach Anspruch 10, wobei im Anhängerfahrzeug (16) einzelne Räder (20) mit individuellen Ansteuersignalen (60) zum Erzeugen (138) eines Antriebsdrehmoments (139) angesteuert werden und/oder individuell gebremst werden.

12. Zugfahrzeug (12) zum Ausführen eines Verfahrens nach einem der vorhergehenden Ansprüche, wobei das Zugfahrzeug (12) zumindest ein Bremssteuergerät (32) umfasst und eingerichtet ist, einen Traktionsverlust (102) mit dem Bremssteuergerät (32) zu bestimmen und eine Beschleunigungsanforderung (46) in Abhängigkeit eines Differenzschlupfs (92), der zum detektierten Traktionsverlust (102) führt, zu bestimmen und die Beschleunigungsanforderung (46) an ein Anhängerbremssteuergerät (48) zu übertragen (118).

13. Anhängerfahrzeug (16) zum Ausführen eines Verfahrens nach einem der Ansprüche 1 bis 11, wobei das Anhängerfahrzeug (16) eingerichtet ist, eine Beschleunigungsanforderung (46) von einem Bremssteuergerät (32) eines Zugfahrzeugs (12) mit einem Anhängerbremssteuergerät (48) des Anhängerfahrzeugs (16) zu empfangen und im Anhängerbremssteuergerät (48) ein Ansteuersignal (60) zum Ansteuern eines elektrischen Antriebs (52) in Abhängigkeit der Beschleunigungsanforderung (46) zu erzeugen und mit dem elektrischen Antrieb (52) des Anhängerfahrzeugs (16) ein Antriebsdrehmoment (139) in Abhängigkeit vom Ansteuersignal (60) zu erzeugen.

14. Gespann (10) aus einem Zugfahrzeug (12) nach Anspruch 12 und einem Anhängerfahrzeug (16) nach Anspruch 13, wobei das Anhängerfahrzeug (16) mit dem Zugfahrzeug (12) über einen CAN-ISO 11992-2 Bus (30) verbunden ist.

15. Computerprogrammprodukt, das Teile von Programmcode umfasst, der, ausgeführt auf einem Bremssteuergerät (32) eines Zugfahrzeugs (12), die vom Bremssteuergerät (32) auszuführenden Schritte des Verfahrens nach einem der Ansprüche 1 bis 11 ausführt, und Teile von Programmcode umfasst, der, ausgeführt auf einem Anhängerbremssteuergerät (48) eines Anhängerfahrzeugs (16), die vom Anhängerbremssteuergerät (48) auszuführenden Schritte des Verfahrens nach einem der Ansprüche 1 bis 11 ausführt.

## Claims

1. Method for supporting a towing vehicle (12) in the event of traction loss (102) by means of a trailer vehicle (16), comprising the steps of:
- determining (90) a differential slip (92) between at least one driven wheel (20a) and at least one non-driven wheel (20b) of the towing vehicle (12) using a brake control unit (32) of the towing vehicle (12), which differential slip is above a predetermined threshold value (100),
- generating (108) an acceleration request (46) depending on the determined differential slip (92) in the brake control unit (32) of the towing vehicle (12),
- transmitting (118) the acceleration request (46) to a trailer brake control unit (48) of the trailer vehicle (16),
- generating (120) a control signal (60) for an electric drive (52) of the trailer vehicle (16) depending on the acceleration request (46) in the trailer brake control unit (48),
- transmitting (140) at least one control signal (60) from the trailer brake control unit (48) to the at least one electric drive (52) of the trailer vehicle (16) and
- generating (138) at least one drive torque (139) using the electric drive (52) depending on the control signal (60).

2. Method according to claim 1, wherein transmitting (118) the acceleration request (46) to the trailer brake control unit (48) comprises transmitting (118) the acceleration request (46) via a CAN-ISO 11992-2 bus (30).

3. Method according to either claim 1 or claim 2, wherein the acceleration request (46) is determined depending on the differential slip (92) of the towing vehicle (12) and a desired acceleration (110a, 110b) by means of a driver control element (112) or a driver assistance system (114).

4. Method according to any of the preceding claims, wherein a vehicle condition (128) of the trailer vehicle (16) is determined (126) using the trailer brake control unit (48) and the generation (120) of the control signal (60) for the electric drive (52) of the trailer vehicle (16) additionally takes place depending on the vehicle condition (128) of the trailer vehicle (16).

5. Method according to claim 4, wherein at least one loading condition (130, 132) of the trailer vehicle (16), in particular comprising at least determining one axle load (130) of the axles (18) of the trailer vehicle (16) and/or a mass distribution (132) in the trailer vehicle (16), is taken into account when determining (126) the vehicle condition (128).

6. Method according to any of the preceding claims, wherein the generation (120) of the control signal (60) and/or the acceleration request (46) is additionally generated depending on at least one articulation angle (122, 124), wherein an articulation angle (122) between the towing vehicle (12) and the trailer vehicle (16) is determined and, in the event that the trailer vehicle (16) is another trailer vehicle (16) which is attached to a trailer vehicle (16), a further articulation angle (124) between the trailer vehicle (16) and the further trailer vehicle (16) is determined.

7. Method according to any of the preceding claims, wherein the generation (138) of the drive torque (139) using the electric drive (52) comprises controlling (144) at least one electric converter (56) of the trailer vehicle (16) for supplying (148) at least one electric motor (58) of the trailer vehicle (16) with energy (55) from an energy store (54) of the trailer vehicle (16).

8. Method according to any of the preceding claims, wherein a differential slip (158) is ascertained, in particular by the electric drive (52), between at least two wheels (20a) of the trailer vehicle (16) driven by the electric drive (52), and
the control signal (60) corresponds to or comprises at least one maximum torque value (142) and a control torque (146) for generating (138) the drive torque (139) using the electric drive (52) is increased stepwise from a predefined starting value (150), in particular using a predetermined step size (152) and using a predetermined time interval (154), or increased continuously, in particular using a predetermined temporal gradient (160), up to the maximum torque value (142), as long as the differential slip (158) of the driven wheels (20a) of the trailer vehicle (16) is below a further predetermined threshold value (156).

9. Method according to any of the preceding claims, wherein the acceleration request (46) corresponds to or comprises a maximum drive torque (142) to be generated using the electric drive (52) and the control signal (60) is generated such that the maximum drive torque (142) to be generated is not exceeded.

10. Method according to any of the preceding claims, wherein a differential slip (136) of the trailer vehicle (16) between at least one driven wheel (20a) and a non-driven wheel (20b) of the trailer vehicle (16) is monitored using the trailer brake control unit (48) and the control signal (60) is determined depending on this differential slip (136).

11. Method according to claim 10, wherein individual wheels (20) in the trailer vehicle (16) are controlled using individual control signals (60) for generating (138) a drive torque (139) and/or are braked individually.

12. Towing vehicle (12) for carrying out a method according to any of the preceding claims, wherein the towing vehicle (12) comprises at least one brake control unit (32) and is designed to determine traction loss (102) using the brake control unit (32) and to determine an acceleration request (46) depending on a differential slip (92), which differential slip leads to the detected traction loss (102), and to transmit (118) the acceleration request (46) to a trailer brake control unit (48).

13. Trailer vehicle (16) for carrying out a method according to any of claims 1 to 11, wherein the trailer vehicle (16) is designed to receive an acceleration request (46) from a brake control unit (32) of a towing vehicle (12) via a trailer brake control unit (48) of the trailer vehicle (16) and to generate a control signal (60) in the trailer brake control unit (48) for controlling an electric drive (52) depending on the acceleration request (46) and to generate a drive torque (139) using the electric drive (52) of the trailer vehicle (16) depending on the control signal (60).

14. Combination (10) comprising a towing vehicle (12) according to claim 12 and a trailer vehicle (16) according to claim 13, wherein the trailer vehicle (16) is connected to the towing vehicle (12) via a CAN-ISO 11992-2 bus (30).

15. Computer program product comprising parts of program code which, when executed on a brake control unit (32) of a towing vehicle (12), carries out the steps of the method according to any of claims 1 to 11 to be carried out by the brake control unit (32), and comprises parts of program code which, when executed on a trailer brake control unit (48) of a trailer vehicle (16), carries out the steps of the method according to any of claims 1 to 11 to be carried out by the trailer brake control unit (48).

## Revendications

1. Procédé d'assistance d'un véhicule tracteur (12) en cas de perte de traction (102) due à un véhicule remorqué (16), comprenant les étapes :
- de détermination (90) d'un glissement différentiel (92) entre au moins une roue motrice (20a) et au moins une roue non motrice (20b) du véhicule tracteur (12) au moyen d'un appareil de commande de frein (32) du véhicule tracteur (12), lequel glissement différentiel est supérieur à une valeur seuil prédéfinie (100),
- de génération (108) d'une demande d'accélération (46) en fonction du glissement différentiel (92) déterminé dans l'appareil de commande de frein (32) du véhicule tracteur (12),
- de transmission (118) de la demande d'accélération (46) à un appareil de commande de frein de remorque (48) du véhicule remorqué (16),
- de génération (120) d'un signal de commande (60) pour un entraînement électrique (52) du véhicule remorqué (16) en fonction de la demande d'accélération (46) dans l'appareil de commande de frein de remorque (48),
- de transmission (140) d'au moins un signal de commande (60) de l'appareil de commande de frein de remorque (48) à l'au moins un entraînement électrique (52) du véhicule remorqué (16) et
- de génération (138) d'au moins un couple d'entraînement (139) au moyen de l'entraînement électrique (52) en fonction du signal de commande (60).

2. Procédé selon la revendication 1, dans lequel la transmission (118) de la demande d'accélération (46) à l'appareil de commande de frein de remorque (48) comprend la transmission (118) de la demande d'accélération (46) par l'intermédiaire d'un bus (30) CAN-ISO 11992-2.

3. Procédé selon la revendication 1 ou 2, dans lequel la demande d'accélération (46) est déterminée en fonction du glissement différentiel (92) du véhicule tracteur (12) et d'une accélération souhaitée (110a, 110b) par un élément d'actionnement par un conducteur (112) ou un système d'assistance au conducteur (114).

4. Procédé selon l'une des revendications précédentes, dans lequel un état de véhicule (128) du véhicule remorqué (16) est déterminé (126) au moyen de l'appareil de commande de frein de remorque (48) et la génération (120) du signal de commande (60) pour l'entraînement électrique (52) du véhicule remorqué (16) est effectuée en outre en fonction de l'état de véhicule (128) du véhicule remorqué (16).

5. Procédé selon la revendication 4, dans lequel, lors de la détermination (126) de l'état de véhicule (128), au moins un état de chargement (130, 132) du véhicule remorqué (16) est pris en compte, comprenant en particulier au moins une charge par essieu (130) des essieux (18) du véhicule remorqué (16) et/ou une répartition de masse (132) dans le véhicule remorqué (16).

6. Procédé selon l'une des revendications précédentes, dans lequel la génération (120) du signal de commande (60) et/ou de la demande d'accélération (46) est en outre effectuée en fonction d'au moins un angle d'articulation (122, 124), dans lequel un angle d'articulation (122) entre le véhicule tracteur (12) et le véhicule remorqué (16) est déterminé et, dans le cas où le véhicule remorqué (16) est un autre véhicule remorqué (16) qui est attelé à un véhicule remorqué (16), un autre angle d'articulation (124) entre le véhicule remorqué (16) et l'autre véhicule remorqué (16) est déterminé.

7. Procédé selon l'une des revendications précédentes, dans lequel la génération (138) du couple d'entraînement (139) au moyen de l'entraînement électrique (52) comprend une commande (144) d'au moins un convertisseur électrique (56) du véhicule remorqué (16) pour alimenter (148) au moins un moteur électrique (58) du véhicule remorqué (16) en énergie (55) à partir d'un accumulateur d'énergie (54) du véhicule remorqué (16).

8. Procédé selon l'une des revendications précédentes, dans lequel un glissement différentiel (158) est déterminé entre au moins deux roues (20a) du véhicule remorqué (16) entraînées par l'entraînement électrique (52), en particulier par l'entraînement électrique (52) et
le signal de commande (60) correspond à au moins une valeur de couple maximale (142) ou comprend celle-ci et un couple de commande (146) permettant de générer (138) le couple d'entraînement (139) au moyen de l'entraînement électrique (52) à partir d'une valeur de départ prédéfinie (150) est augmenté progressivement, en particulier avec une largeur de pas (152) prédéfinie et avec un intervalle de temps (154) prédéfini, ou en continu, en particulier avec une pente temporelle (160) prédéfinie, jusqu'à la valeur de couple maximale (142), tant que le glissement différentiel (158) des roues motrices (20a) du véhicule remorqué (16) est inférieur à une autre valeur seuil (156) prédéfinie.

9. Procédé selon l'une des revendications précédentes, dans lequel la demande d'accélération (46) correspond à un couple d'entraînement maximal (142) à générer au moyen de l'entraînement électrique (52) ou comprend ledit couple d'entraînement maximal et le signal de commande (60) est généré de telle sorte que le couple d'entraînement maximal (142) à générer n'est pas dépassé.

10. Procédé selon l'une des revendications précédentes, dans lequel un glissement différentiel (136) du véhicule remorqué (16) entre au moins une roue motrice (20a) et une roue non motrice (20b) du véhicule remorqué (16) est surveillé au moyen de l'appareil de commande de frein de remorque (48) et le signal de commande (60) est déterminé en fonction de ce glissement différentiel (136).

11. Procédé selon la revendication 10, dans lequel, dans le véhicule remorqué (16), différentes roues (20) sont commandées par des signaux de commande (60) individuels pour générer (138) un couple d'entraînement (139) et/ou sont freinées individuellement.

12. Véhicule tracteur (12) permettant de mettre en oeuvre un procédé selon l'une des revendications précédentes, dans lequel le véhicule tracteur (12) comprend au moins un appareil de commande de frein (32) et est conçu pour déterminer une perte de traction (102) au moyen de l'appareil de commande de frein (32), pour déterminer une demande d'accélération (46) en fonction d'un glissement différentiel (92) conduisant à la perte de traction (102) détectée, et pour transmettre (118) la demande d'accélération (46) à un appareil de commande de frein de remorque (48).

13. Véhicule remorqué (16) permettant de mettre en oeuvre un procédé selon l'une des revendications 1 à 11, dans lequel le véhicule remorqué (16) est conçu pour recevoir une demande d'accélération (46) d'un appareil de commande de frein (32) d'un véhicule tracteur (12) au moyen d'un appareil de commande de frein de remorque (48) du véhicule remorqué (16), pour générer, dans l'appareil de commande de frein de remorque (48), un signal de commande (60) permettant de commander un entraînement électrique (52) en fonction de la demande d'accélération (46), et pour générer, au moyen de l'entraînement électrique (52) du véhicule remorqué (16), un couple d'entraînement (139) en fonction du signal de commande (60).

14. Attelage (10) constitué d'un véhicule tracteur (12) selon la revendication 12 et d'un véhicule remorqué (16) selon la revendication 13, dans lequel le véhicule remorqué (16) est relié au véhicule tracteur (12) par l'intermédiaire d'un bus (30) CAN-ISO 11992-2.

15. Produit de programme informatique comprenant des parties d'un code de programme qui, exécuté sur un appareil de commande de frein (32) d'un véhicule tracteur (12), exécute les étapes du procédé selon l'une des revendications 1 à 11, lesquelles étapes doivent être exécutées par l'appareil de commande de frein (32), et comprenant des parties d'un code de programme qui, exécuté sur un appareil de commande de frein de remorque (48) d'un véhicule remorqué (16), exécute les étapes du procédé selon l'une des revendications 1 à 11, lesquelles étapes doivent être exécutées par l'appareil de commande de frein de remorque (48).
